# EUROPÄISCHE PATENTSCHRIFT

(11) **EP 1 221 571 B1**
(45) Veröffentlichungstag und Bekanntmachung des Hinweises auf die Patenterteilung: **26.10.2005**
(21) Anmeldenummer: 02075013.9
(22) Anmeldetag: 02.01.2002
(51) Int. Cl.: F23D 14/10, F23D 14/66, F23D 14/78

(54) **Verbrennungsvorrichtung mit einer Kühlung**
Cooled combustion apparatus
Appareil de combustion avec refroidissement

(30) Priorität: 03.01.2001 NL 1017021
(43) Veröffentlichungstag der Anmeldung: 10.07.2002
(73) Patentinhaber: NEFIT BUDERUS B.V., 7418 BB Deventer (NL)
(72) Erfinder: Heino, Alex Hajo, 7552 EK Hengelo (NL); Verdonschot, Johannes Jacobus, 7431 AH Diepenveen (NL)
(74) Vertreter: Mertens, Hans Victor

(56) Entgegenhaltungen:
- EP-A- 0 685 686
- DE-A- 19 505 614
- GB-A- 185 209
- GB-A- 432 147
- PATENT ABSTRACTS OF JAPAN vol. 011, no. 098 (M-575), 27. März 1987 (1987-03-27) & JP 61 246512 A (MATSUSHITA ELECTRIC IND CO LTD), 1. November 1986 (1986-11-01)

## Beschreibung

Die Erfindung betrifft eine Verbrennungsvorrichtung zum Verbrennen eines Gemisches aus Gas und Luft, umfassend: einen in einem Brennraum aufgestellten Brenner mit zwei Enden; eine Mischvorrichtung zum Mischen des Gases und der Luft; einen ersten Zufuhrkanal zum Zuführen des Gases zur Mischvorrichtung; einen zweiten Zufuhrkanal zum Zuführen der Luft zur Mischvorrichtung; und einen dritten Zufuhrkanal zum Zuführen des Gemisches aus Gas und Luft von der Mischvorrichtung zum Brenner.

Verbrennungsvorrichtungen, wie Heizeinrichtungen, müssen hohe Anforderungen erfüllen. Die Abmessungen müssen klein sein, der Wirkungsgrad hoch, die Kosten bei der Herstellung aus Konkurrenzgründen niedrig und die Zuverlässigkeit und Wartungsfreundlichkeit hoch. Außerdem sind die zulässigen Werte im Bereich der Lärmerzeugung und der Schadstoffemission niedrig und müssen die bei der Herstellung der Verbrennungsvorrichtung verwendeten Grundstoffe nach Ende der Nutzungsdauer der Verbrennungsvorrichtung so weit wie möglich wiederverwendet werden können. Um diesen Anforderungen so weit wie möglich gerecht zu werden, werden Verbrennungsvorrichtungen häufig mit einem zentral aufgestellten Brenner versehen, bei dem ein Wärmetauscher, der beispielsweise als schraubenlinienförrig gewickeltes Rohr konstruiert ist, um den Brenner herum angeordnet ist. Dieser Aufbau ermöglicht ein kompaktes Ganzes, das zum Beispiel an einer Wand hängend montiert werden kann. Derartige Verbrennungsvorrichtungen sind häufig mit einem Verdrängerkörper versehen, der an einem Ende des Brenners den Rauchgasstrom dicht am Wärmetauscher entlang oder durch diesen hindurch leitet, bevor die Rauchgase zum Rauchrohr strömen. Dadurch wird erreicht, daß die Wärme der Rauchgase gut an den Wärmetauscher abgegeben wird, was einen positiven Einfluß auf den Wirkungsgrad der Verbrennungsvorrichtung hat.

Ein Problem hierbei ist, daß mehrere Bauteile in derartigen Verbrennungsvorrichtungen Rauchgasen sehr hoher Temperatur ausgesetzt sind. Insbesondere der Verdrängerkörper, der sich an einem Ende des Brenners befindet, wird zumindest lokal sehr stark erhitzt, da die noch nicht oder nur kaum abgekühlten Rauchgase sehr dicht daran entlang strömen. Daneben tritt dieses Problem auch am anderen Ende des Brenners auf, an dem ein Abschlußelement, das den Brennraum zwischen Brenner und Wärmetauscher an diesem Ende abschließt, ebenfalls Rauchgasen sehr hoher Temperatur ausgesetzt ist.

Eine bekannte Lösung des oben beschriebenen Problems besteht darin, die von einer starken Erhitzung betroffenen Bauteile mit einer Schicht Isoliermaterial zu versehen. Isoliermaterial, das in Verbrennungsvorrichtungen verwendet wird, hat jedoch eine faserige Struktur. Angesichts der stets strengeren gesetzlichen Anforderungen, die an die Verwendung derartiger Materialien gestellt werden, kann deren Verwendung in den kommenden Jahren durch Verschärfung der gesetzlichen Anforderungen weiter eingeschränkt werden. Ein zweiter Nachteil bei der Verwendung von Isolationsmaterial besteht darin, daß die Freiheit bei dessen Formgebung begrenzt ist. Für einen möglichst hohen energetischen Wirkungsgrad der Verbrennungsvorrichtung müssen die Rauchgase auf vorteilhafte Weise zum Wärmetauscher geleitet werden, um die Wärmeübertragung von den heißen Rauchgasen zum Wärmetauscher zu optimalisieren. Durch die Verwendung einer Schicht Isoliermaterial unter anderem auf dem Verdrängerkörper wird die Freiheit bei der Formgebung desselben in gewissem Maße eingeschränkt, weshalb die Strömung der Rauchgase zum Wärmetauscher nicht so optimal wie möglich stattfinden kann. Ein weiterer Nachteil besteht darin, daß die Kosten bei der Herstellung der Verbrennungsvorrichtung zunehmen, da mehr Bauteile eingebaut werden müssen. Noch ein weiterer Nachteil besteht darin, daß die Wartungsfreundlichkeit abnimmt, da das Demontieren der Verbrennungsvorrichtung beispielsweise beim Reinigen zeitraubender wird und die Zugänglichkeit verschiedener Bauteile durch die Anwesenheit der Isolierung abnimmt. Daneben sind Isoliermaterialien im allgemeinen mechanisch viel weniger beanspruchbar als andere im Brenner oder angrenzenden Bauteilen verwendete Materialien, wie Metalle.

Aus NL 1009884 ist ein Aufbau bekannt, in dem sich die Zufuhr des Gas-Luftgemisches und die Abfuhr der Rauchgase beide an ein und demselben Ende des länglichen Brenners befinden und in dem sich an diesem Ende ein Verdrängerkörper befindet. Der Verdrängerkörper wird offenbar mit Hilfe eines in dessen Inneren strömenden Gas-Luftgemisches gekühlt, wodurch der Einsatz von Isoliermaterial dort überflüssig erscheint. Ein Nachteil besteht darin, daß am anderen Ende des Brenners eine andere Lösung, wie das Anbringen von Isolierung mit den genannten Nachteilen, verwendet werden muß. Ein anderer Nachteil besteht darin, daß sich, wenn der Verdrängerkörper mit einer derartigen Kühlung versehen wird, sowohl die Zufuhr des Gas-Luftgemisches als auch das Rauchrohr auf ein und derselben Seite des länglichen Brenners befinden müssen, was die Freiheit und technischen Wahlmöglichkeiten des Konstrukteurs beim Entwurf der Verbrennungsvorrichtung einschränkt.

Dokument DE-A1-195.05.614 offenbart einen rotationssymmetrischen Vormischbrenner. Die Verbrennungsluft strömt ein durch einen Einströmungskanal. Der Brennstoff wird zur Verbrennungsluft eingeduscht durch eine Brennstoffhauptstuffe. Der Brenner umfasst einen ringförmigen Kanal, wo die Verbrennungsluft und der Brennstoff vermischt worden. Zwei Gemischströme strömen durch separate, ringförmig verlaufende Kanäle zum Austritt des Vormischbrenners. Der Einströmungskanal für die Verbrennungsluft umfasst eine radial verlaufende Wand die brennraumseitig eine Brennerfront bildet. Diese Brennerfront wird inwendig durch die dort einströmende Verbrennungsluft gekült.

Es ist die Aufgabe der Erfindung, eine Verbrennungsvorrichtung bereitzustellen, die dem Konstrukteur der Verbrennungsvorrichtung ein größeres Maß an technischer Freiheit bietet, um die bereits genannten Forderungen, die an eine Verbrennungsvorrichtung gestellt werden, auf optimalere Weise aufeinander abzustimmen. Zur Erfüllung dieser und anderer Aufgaben ist die erfindungsgemäße Verbrennungsvorrichtung dadurch gekennzeichnet, daß mindestens einer der Zufuhrkanäle von einem der Enden des Brenners über mindestens einen Hohlraum im Brenner zum anderen Ende des Brenners verläuft und sich in mindestens einem nahe dem Brenner gelegenen Bauteil zum Kühlen mindestens eines dem Brennraum zugewandten Abschnitts des mindestens einen Bauteils erstreckt. Indem man mindestens einen der Zufuhrkanäle durch mindestens einen länglichen Hohlraum im Brenner durch den Brenner hindurch führt, ist es möglich, das in dem mindestens einen Zufuhrkanal strömende, relativ kühle Fluid an den Enden des Brenners zur Kühlung mindestens eines sich nahe dem Brenner befindenden Bauteils einzusetzen. Da auf diese Weise eine Verwendung von Isoliermaterialien im Brennraum nicht notwendig ist, wird einer eventueller Verschärfung der gesetzlichen Forderungen bezüglich der Verwendung von faserhaltigen Materialien zuvorgekommen. Außerdem nimmt durch die Abwesenheit von Isoliermaterial die Freiheit bei der Formgebung des zumindest einen nahe dem Brenner gelegenen Bauteils zu, wodurch dieses eine vorteilhafte Form erhalten kann, so daß die Rauchgase auf vorteilhafte Weise zum Wärmetauscher geführt werden können. Ein anderer Vorteil besteht darin, daß die Kosten bei der Herstellung der Verbrennungs-vorrichtung niedriger sind, da weniger Bauteile montiert werden müssen. Noch ein weiterer Vorteil besteht darin, daß der Konstrukteur der Verbrennungsvorrichtung ein größeres Maß an Freiheit erhält, weil die Zahl der Wahlmöglichkeiten für die Anordnung der Zufuhrkanäle für das Gas, die Luft und das Gas-Luftgemisch zunimmt, da die Erfindung es ermöglicht, daß der Eingang des mindestens einen Zufuhrkanals, der durch den Hohlraum im Brenner verläuft, sich am einen oder am anderen Ende des Brenners befindet. Ein wieder anderer Vorteil besteht darin, daß das nahe dem Brenner gelegene Bauteil durch die Abwesenheit einer Isolierung aus weniger verschiedenen Grundstoffen besteht, was die Rückgewinnung von Grundstoffen beim Verschrotten der Verbrennungsvorrichtung vereinfacht. Es ist weiterhin von Vorteil, daß der Wirkungsgrad verbessert wird, da ein Teil der Wärme der Rauchgase über das Fluid in dem mindestens einen Zufuhrkanal, der sich in dem mindestens einen Bauteil befindet, zum Brennraum zurückgeleitet wird.

Für sich genommen ist ein durch einen Rohrstumpf gebildeter Hohlraum in einem Abschnitt des Brenners, der einen Teil des dritten Zufuhrkanals ausmacht und im Brenner mündet, bekannt. Die Funktion dieses sich vom ersten Ende her teilweise in den Brenner erstreckenden und im Brenner mündenden Kanals besteht jedoch darin, die Lärmerzeugung des Brenners, die unter anderem durch die strömenden Fluide in den Zufuhrkanälen verursacht wird, zu verringern.

In einer bevorzugten Ausführungsform ist der durch den Hohlraum im Brenner verlaufende Zufuhrkanal der dritte Zufuhrkanal. Ein Vorteil hiervon ist, daß dies einfach zu realisieren ist, weil das Gemisch aus Gas und Luft dem Brenner zum Zwecke der Verbrennung sowieso zugeführt wird. Es hat sich hierbei jedoch auf überraschende Weise gezeigt, daß die Lärmerzeugung der Verbrennungsvorrichtung abnimmt, weil der Hohlraum im Brenner, durch den das Gas-Luftgemisch hindurchströmt und der beispielsweise die Form eines Rohres hat, durch dessen erheblich größere Länge die vorgenannte Funktion einer akustischen Impedanz auf bessere Weise erfüllt und damit den Lärm im Brenner weiter verringert. Zugleich hat sich auf überraschende Weise gezeigt, daß eine vorteilhafte, gleichmäßige Strömung des Gas-Luftgemisches im Brenner stattfindet. Dies wird durch die größere Länge des Hohlraums im Brenner, durch den das Gas-Luftgemisch hindurchströmt, verursacht, so daß dieser Hohlraum an einem Ende des Brenners mündet. Hierdurch kann das Ausströmen des Gas-Luftgemisches und damit die Verbrennung auf vorteilhafte Weise über die Oberfläche des Brenners verteilt werden, wodurch sich beispielsweise eine gleichmäßige Wärmebeanspruchung der Brenneroberfläche oder eine andere günstige Verteilung erreichen läßt.

In bevorzugten Ausführungsformen umfaßt der mindestens eine dem Brennraum zugewandte Abschnitt eine Wand, ist die Wand dünn, hat die Wand eine gute Wärmeleitfähigkeit, ist die Wand auf der den Rauchgasen abgewandten Seite mit Rippen versehen und ist an oder entlang der Wand auf der den Rauchgasen abgewandten Seite mindestens ein Leitverschlag angebracht. Ein Vorteil ist, daß die Wärmeübertragung zum Zufuhrkanal, der sich in dem zu kühlenden Bauteil erstreckt, groß ist, was die Temperatur der Wand erheblich reduziert.

In einer bevorzugten Ausführungsform umfaßt das mindestens eine Bauteil einen Verdrängerkörper, der sich an einem der Enden des Brenners befindet, wobei Rauchgase entlang einer Wand des Verdrängerkörpers strömen. Der Verdrängerkörper gehört zu denjenigen Bauteilen der Verbrennungsvorrichtung, die thermisch am stärksten beansprucht werden, weshalb die vorgenannten Vorteile erheblich sind. Daneben wird die Möglichkeit eröffnet, den Brenner und den Verdrängerkörper in einem Stück herzustellen, weshalb die Demontage und Reinigung der Verbrennungsvorrichtung vereinfacht werden, weil der Brenner und der Verdrängerkörper als ein Stück gehandhabt werden können.

In bevorzugten Ausführungsformen ist der Verdrängerkörper in der Hauptsache abgestumpft kegelförmig oder ist die Oberfläche des dem Brennraum zugewandten Abschnitts des Verdrängerkörpers kugelförmig. Die Abwesenheit einer Isolierschicht auf dem Verdrängerkörper eröffnet die Möglichkeit, der Wand des Verdrängerkörpers, an der die heißen Rauchgase entlangströmen und die zum Beispiel aus Hochtemperaturstahl hergestellt sein kann, eine vorteilhafte Form, wie Kegelstumpf- oder Kugelform zu geben. Durch diese Form wird bewirkt, daß die heißen Rauchgase auf äußerst effektive und allmähliche Weise vom Brennraum zu einem angrenzenden Wärmetauscher geleitet werden, wodurch die Wärmeübertragung von den Rauchgasen zum Wärmetauscher sehr gut ist und die thermische Belastung gleichmäßig und großflächig über den Wärmetauscher verteilt wird. Hiermit erreicht man, daß der energetische Wirkungsgrad der Verbrennungsvorrichtung hoch und der Verbrauch von Gas für die Verbrennung dementsprechend niedrig ist.

In einer bevorzugten Ausführungsform umfaßt das mindestens eine Bauteil ein Abschlußelement, das den Brennraum an einem Ende des Brenners abschließt. Ein Vorteil ist, daß die Wartungsfreundlichkeit noch weiter erhöht wird, weil der Brenner zusammen mit dem Verdrängerkörper und dem Abschlußelement als ein Ganzes aus der Verbrennungsvorrichtung entfernt und darin montiert werden kann, wobei das Abschlußelement eine große Öffnung zum Brennraum hin freigeben kann, wodurch der Brenner und die Verbrennungsvorrichtung als Ganzes zugänglicher und leichter zu reinigen sind, während auch die Schnelligkeit der Montage und Demontage zunimmt.

Die Erfindung soll durch die beiliegende Zeichnung, die ein nicht einschränkendes Ausführungsbeispiel zeigt, näher erläutert werden. Es zeigen:
Fig. 1 einen Längsschnitt durch einen erfindungsgemäßen Brenner und Verdrängerkörper;
Fig. 2 einen Längsschnitt durch einen weiteren erfindungsgemäßen Brenner und Verdrängerkörper;
Fig. 3 einen Längsschnitt durch einen Abschnitt noch eines weiteren erfindungsgemäßen Brenners;
Fig. 4 einen Längsschnitt durch einen Abschnitt noch wieder eines weiteren erfindungsgemäßen Brenners und Verdrängerkörpers.

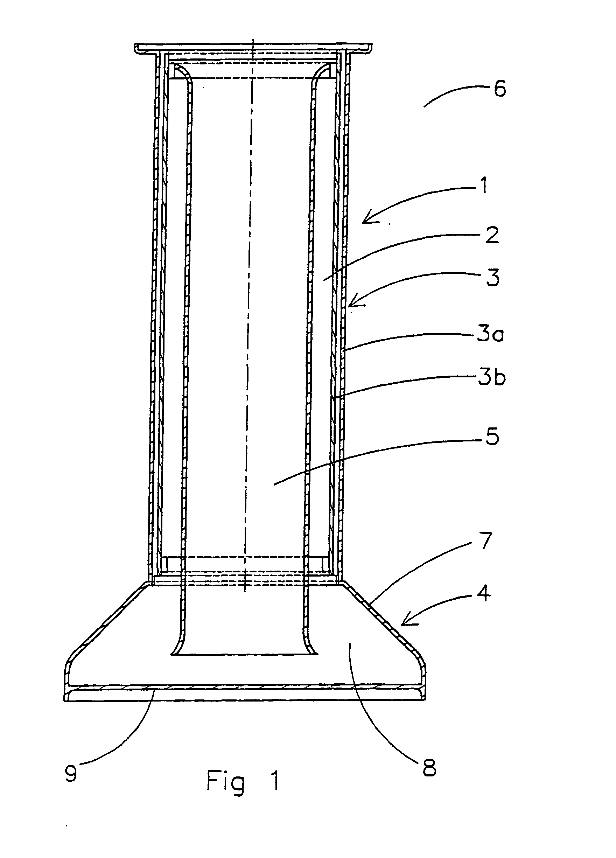

Fig. 1 zeigt einen zylinderförmigen, länglichen Brenner 1 und einen mit dem Brenner 1 verbundenen Verdrängerkörper 4. Der Brenner 1 umfaßt eine rohrförmige Wand 3, die aus einer äußeren Wand 3a und einer inneren Wand 3b besteht, die beide mit einer großen Anzahl nicht gezeigter Perforationen versehen sind. Das Gas-Luftgemisch strömt durch einen ringförmigen Raum 2 im Inneren des Brenners zur Wand 3 des Brenners 1, um durch die Perforationen in der Wand 3 gleichmäßig und verteilt über die Wand 3 in den Brennraum 6 zu strömen, wo die Verbrennung des Gemisches stattfindet. Der Verdrängerkörper 4 umfaßt eine Außenwand 7, entlang derer die Rauchgase zu einem nicht gezeigten Rauchrohr strömen. Weiterhin ist im Brenner 1 vom oberen Ende zum unteren Ende ein Zufuhrkanal 5 angeordnet, der am unteren Ende bis in den Verdrängerkörper 4 hinein läuft und in einen Hohlraum 8 im Verdrängerkörper 4 mündet. Der Hohlraum 8 ist an der Unterseite durch eine Wand 9 abgeschlossen und steht mit dem ringförmigen Raum 2 des Brenners 1 in Verbindung. Auf diese Weise wird ein durchgehender Kanal gebildet, in dem von der Oberseite des Brenners 1 aus durch das obere offene Ende des Zufuhrkanals 5 ein Gas-Luftgemisch 5 zur anderen Seite des Brenners 1, durch den Hohlraum 8 in den Verdrängerkörper 4 und anschließend durch den ringförmigen Raum 2 zur Wand 3 des Brenners 1 strömt. Die Wand 7 des Verdrängerkörpers 4, an deren Außenseite die heißen Rauchgase entlangströmen, wird nun durch das Gas-Luftgemisch, das eine niedrige Temperatur hat und an der Innenseite der Wand 7 entlangströmt, gekühlt. Außerdem sorgt die große Länge des Kanals 5 dafür, daß die Lärmerzeugung des Brenners niedrig ist, da die akustische Impedanz aufgrund der großen Länge des Kanals 5 niedrig ist.

Die in Fig. 1 gezeigte Kombination aus Brenner 1 und Verdrängerkörper 4 kann vorteilhaft aus hitzebeständigem Hochtemperaturstahl hergestellt werden. Hierdurch ist die Strömung der Rauchgase sehr gut definiert. Dadurch, daß der Brenner 1 und der Verdrängerkörper 4 als ein Ganzes hergestellt sind, ist es zugleich möglich, den Brenner bei der Durchführung von Wartungs- oder Reparaturarbeiten an der Verbrennungsvorrichtung zusammen mit der Verdrängerkörper 4 als ein Ganzes aus dem Brennraum 6 zu entfernen. Zugleich ermöglicht es die Tatsache, daß der Verdrängerkörper 4 aus Hochtemperaturstahl hergestellt ist, in Kombination mit der Tatsache, daß auf dem Verdrängerkörper 4 keine Isolierung vorhanden ist, dem Verdrängerkörper 4 eine vorteilhafte Form, wie die in Fig. 1 gezeigte Kegelstumpfform zu geben. Hierdurch erreicht man, daß die heißen Rauchgase vom Brennraum 6 gleichmäßig zu einem nicht gezeigten Wärmetauscher geleitet werden, wodurch die thermische Beanspruchung gut über den Wärmetauscher verteilt wird.

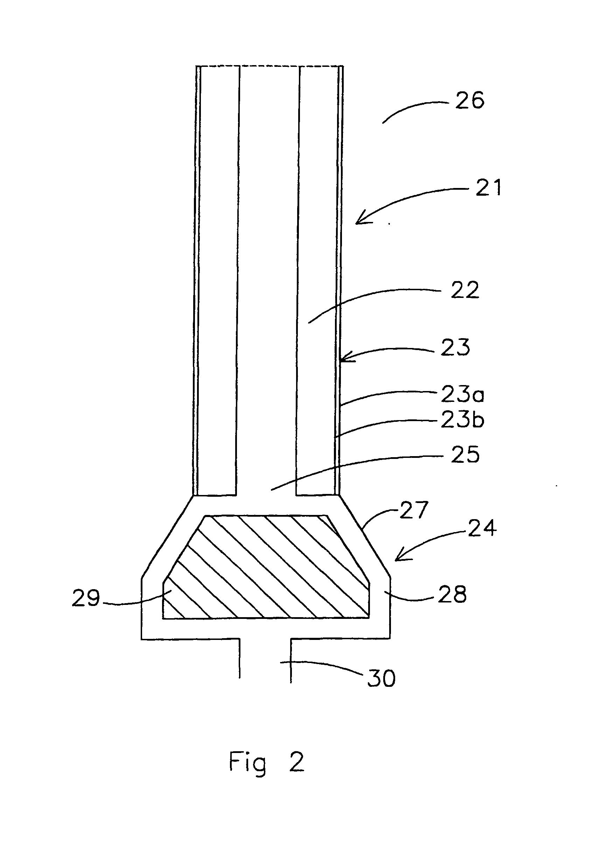

Fig. 2 zeigt einen Brenner 21 mit einem Verdrängerkörper 24, wobei der Brenner 21 ebenso wie der in Fig. 1 gezeigte Brenner eine zylinderförmige Wand 23 mit einer mit einer großen Anzahl nicht gezeigter Perforationen versehenen Innenwand 23a und Außenwand 23b umfaßt. Das Gas-Luftgemisch wird durch einen ringförmigen Raum 22 zur Wand 23 geleitet. Der in Fig. 2 gezeigte Verdrängerkörper 24 umfaßt einen Hohlraum 28, der sich direkt hinter einer Wand 27 befindet, an der die heißen Rauchgase entlangströmen. Der Hohlraum 28 ist mit einem Zufuhrkanal 25 verbunden, der durch den Brenner 21 verläuft, und mit einem Zufuhrkanal 30. Indem man nun das Gas und/oder die Luft, die für die Verbrennung erforderlich sind, von der Unterseite her über den Zufuhrkanal 30, über den Hohlraum 28 im Verdrängerkörper 24 und über den Zufuhrkanal 25 führt, erreicht man, daß das Gas oder die Luft die Wand 27 des Verdrängerkörpers 24 kühlt. Um die Kühlwirkung zu vergrößern, ist der Verdrängerkörper 24 mit einem Führungskörper 29 ausgestattet, der den Gas- oder Luftstrom dicht an der Wand 27 entlangleitet. Neben den bei Fig. 1 genannten Vorteilen hat die in Fig. 2 gezeigte Kombination aus Brenner und Verdrängerkörper den Vorteil, daß das Maß an Freiheit beim Entwurf der Verbrennungsvorrichtung vergrößert wird, weil die in Fig. 2 gezeigte Kombination die Möglichkeit bietet, wahlweise das Gas und/oder die Luft, die für die Verbrennung erforderlich sind, von der Unterseite der Verbrennungsvorrichtung her zuzuführen.

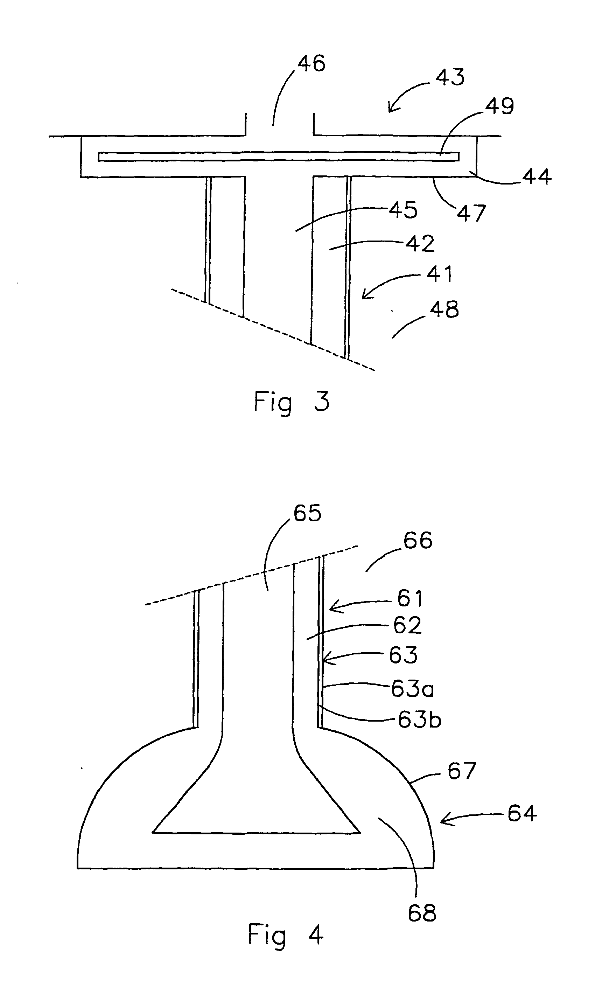

Fig. 3 zeigt einen Brenner 41 mit einem ringförmigen Raum 42, wobei der Brenner mit einem Abschlußelement 43 mit einer Wand 47 verbunden ist, wobei das Abschlußelement 43 einen Brennraum 48 an dessen Oberseite abschließt. Das Abschlußelement 43 ist mit einem Hohlraum 44 versehen, der sich hinter der Wand 47 befindet. Das Gas, die Luft oder das Gas-Luftgemisch, das/die durch einen Zufuhrkanal 45 im Brenner 41 vom einen Ende des Brenners 41 zum anderen Ende des Brenners 41 strömt, strömt gleichfalls durch den Hohlraum 44 im Abschlußelement 43, um dessen Wand 47 zu kühlen. Um das Gas, die Luft oder das Gas-Luftgemisch dicht an der vom Brennraum 48 abgewandten Seite der Wand 47 entlang zu leiten, ist das Abschlußelement 43 mit einem Führungskörper 49 versehen, der mit nicht gezeigten Befestigungselementen am Abschlußelement 43 befestigt ist. Der Brenner 41 kann zusammen mit dem hiermit verbundenen Abschlußelement 43 und einem eventuell hiermit verbundenen, in Fig. 3 nicht gezeigten Verdrängerkörper als ein Ganzes, beispielsweise nach oben aus dem Brennraum 48 entfernt werden, wobei die durch das Abschlußelement 43 freigegebene Öffnung eine große Öffnung zum Brennraum 48 freigibt.

Fig. 4 zeigt einen zylinderförmigen Brenner 61 mit einem Verdrängerkörper 64, bei dem das Gas-Luftgemisch durch einen ringförmigen Raum 62 einer Brenneroberfläche 63 zugeführt wird und die Brenneroberfläche 63 eine Außenoberfläche 63a und eine Innenoberfläche 63b umfaßt, die beide mit nicht gezeigten Perforationen versehen sind. Das Gas-Luftgemisch wird analog zu der in Fig. 1 gezeigten Ausführungsform durch einen Zufuhrkanal 65 zugeführt, der in einen Hohlraum 68 im Verdrängerkörper 64 mündet, aus welchem das Gas-Luftgemisch zum ringförmigen Raum 62 strömt. Im Verdrängerkörper 64 strömt das Gas-Luftgemisch entlang einer Wand 67, um diese zu kühlen. Der Verdrängerkörper ist kugelförmig, um so die Rauchgase auf eine sehr effektive Weise zu einem nicht gezeigten Wärmetauscher zu leiten. Dies sorgt für eine sehr gute Um- oder Durchströmung des Wärmetauschers mit Rauchgasen, wodurch die Wärmeübertragung von den Rauchgasen zum Wärmetauscher sehr gut ist.

## Patentansprüche

1. Verbrennungsvorrichtung zum Verbrennen eines Gemisches aus Gas und Luft, umfassend:
einen in einem Brennraum aufgestellten Brenner (1) mit zwei Enden;
eine Mischvorrichtung zum Mischen des Gases und der Luft;
einen ersten Zufuhrkanal zum Zuführen des Gases zur Mischvorrichtung;
einen zweiten Zufuhrkanal zum Zuführen der Luft zur Mischvorrichtung; und
einen dritten Zufuhrkanal (5) zum Zuführen des Gemisches aus Gas und Luft von der Mischvorrichtung zum Brenner, wobei mindestens einer der Zufuhrkanäle (5) von einem der Enden des Brenners (1) über mindestens einen Hohlraum (5) im Brenner (1) zum anderen Ende des Brenners (1) verläuft und sich dabei in mindestens einem nahe dem Brenner (1) gelegenen Bauteil (4) zum Kühlen mindestens eines dem Brennraum zugewandten Abschnitts (7) des mindestens einen Bauteils (4) erstreckt, **dadurch gekennzeichnet, daß** das mindestens eine Bauteil einen Verdrängerkörper (4) umfaßt, der sich an einem der Enden des Brenners (1) befindet, wobei Rauchgase entlang einer Wand (7) des Verdrängerkörpers (4) strömen.

2. Verbrennungsvorrichtung nach Anspruch 1, **dadurch gekennzeichnet, daß** der durch den Hohlraum im Brenner verlaufende Zufuhrkanal der dritte Zufuhrkanal (5) ist.

3. Verbrennungsvorrichtung nach einem der vorhergehenden Ansprüche, **dadurch gekennzeichnet, daß** der mindestens eine dem Brennraum zugewandte Abschnitt eine Wand (7) umfaßt.

4. Verbrennungsvorrichtung nach Anspruch 3, **dadurch gekennzeichnet, daß** die Wand (7) dünn ist.

5. Verbrennungsvorrichtung nach Anspruch 3 oder 4, **dadurch gekennzeichnet, daß** die Wand (7) eine gute Wärmeleitfähigkeit hat.

6. Verbrennungsvorrichtung nach einem der Ansprüche 3 - 5, **dadurch gekennzeichnet, daß** die Wand (7) auf der den Rauchgasen abgewandten Seite mit Rippen versehen ist.

7. Verbrennungsvorrichtung nach einem der Ansprüche 3 - 6, **dadurch gekennzeichnet, daß** an oder entlang der Wand (27) auf der den Rauchgasen abgewandten Seite mindestens ein Leitverschlag oder Führungskörper (29) angebracht ist.

8. Verbrennungsvorrichtung nach einem der Ansprüche 1-7, **dadurch gekennzeichnet, daß** der Verdrängerkörper (4) in der Hauptsache abgestumpft kegelförmig ist.

9. Verbrennungsvorrichtung nach einem der Ansprüche 1-8, **dadurch gekennzeichnet, daß** der dem Brennraum zugewandte Abschnitt des Verdrängerkörpers (64) kugelförmig ist.

10. Verbrennungsvorrichtung nach einem der Ansprüche 1-9, **dadurch gekennzeichnet, daß** das mindestens eine Bauteil ein Abschlußelement (43) umfaßt, das den Brennraum an einem Ende des Brenners (41) abschließt.

## Claims

1. Combustion device for burning a mixture of gas and air. comprising:
a burner (1) having two ends set up in a combustion chamber;
a mixing device for mixing the gas and the air;
a first feed channel for supplying the gas to the mixing device;
a second feed channel for supplying the air to the mixing device; and
a third feed channel (5) for supplying the mixture of gas and air from the mixing device to the burner, wherein at least one of the feed channels (5) runs from one of the ends of the burner (1) via at least one hollow chamber (5) in the burner (1) to the other end of the burner (1) and in doing so extends in at least one component (4) located close to the burner (1) for cooling at least one section (7) of the at least one component (4) facing towards the combustion chamber, **characterised in that** the at least one component comprises a displacer (4) located at one of the ends of the burner (1), wherein flue gases flow along a wall (7) of the displacer (4).

2. Combustion device according to claim 1, **characterised in that** the feed channel running through the hollow chamber in the burner is the third feed channel (5).

3. Combustion device according to one of the preceding claims, **characterised in that** the at least one section facing towards the combustion chamber comprises a wall (7).

4. Combustion device according to claim 3, **characterised in that** the wall (7) is thin.

5. Combustion device according to claim 3 or 4, **characterised in that** the wall (7) has high thermal conductivity.

6. Combustion device according to one of claims 3 - 5, **characterised in that** the wall (7) is provided with ribs on the side facing towards the flue gases.

7. Combustion device according to one of claims 3 - 6, **characterised in that** on or along the wall (27) on the side facing towards the flue gases at least one routing partition or guide member (29) is fitted.

8. Combustion device according to one of claims 1 - 7, **characterised in that** the displacer (4) is substantially in the shape of a truncated cone.

9. Combustion device according to one of claims 1 - 8, **characterised in that** the section of the displacer (64) facing towards the combustion chamber is spherical in shape.

10. Combustion device according to one of claims 1 - 9, **characterised in that** at least one component comprises a closing member (43) which closes off the combustion chamber at one end of the burner (41).

## Revendications

1. Dispositif de combustion pour la combustion d'un mélange de gaz et d'air, comprenant :
- un brûleur (1) monté dans une chambre de combustion et présentant deux extrémités ;
- un organe mélangeur pour mélanger le gaz et l'air ;
- un premier canal d'alimentation pour admettre le gaz à l'organe mélangeur ;
- un deuxième canal d'alimentation pour admettre l'air à l'organe mélangeur ; et
- un troisième canal d'alimentation (5) pour admettre le mélange de gaz et d'air de l'organe mélangeur au brûleur, dans lequel au moins l'un des canaux (5) d'alimentation court de l'une des extrémités du brûleur (1) via au moins un espace creux (5) dans le brûleur (1) à l'autre extrémité du brûleur (1) et s'étend en conséquence dans au moins un composant (4) placé à proximité du brûleur (1) pour refroidir au moins l'un des tronçons (7) tourné vers la chambre de combustion du au moins un composant (4),
**caractérisé en ce que**, le au moins un composant comporte un corps de déplacement (4), qui se trouve à l'une des extrémités du brûleur (1), les gaz brûlés s'écoulant le long d'une paroi (7) du corps de déplacement (4).

2. Dispositif de combustion selon la revendication 1, **caractérisé en ce que** le canal d'alimentation passant à travers l'espace creux dans le brûleur constitue le troisième canal d'alimentation (5).

3. Dispositif de combustion selon l'une des revendications précédentes,
**caractérisé en ce que**, le au moins un tronçon tourné vers la chambre de combustion comporte une paroi (7).

4. Dispositif de combustion selon la revendication 3, **caractérisé en ce que** la paroi (7) est mince.

5. Dispositif de combustion selon la revendication 3 ou 4, **caractérisé en ce que** la paroi (7) présente une bonne conductibilité thermique.

6. Dispositif de combustion selon l'une des revendications 3 à 5, **caractérisé en ce que** la paroi (7) est munie, sur la face opposée aux gaz brûlés, de nervures ou d'ailettes.

7. Dispositif de combustion selon l'une des revendications 3 à 6, **caractérisé en ce que**, sur ou le long de la paroi (27) sur la face opposée aux gaz brûlés, est disposée au moins une cloison de guidage ou un corps de guidage (29).

8. Dispositif de combustion selon l'une des revendications 1 à 7, **caractérisé en ce que** le corps de déplacement (4) est réalisé principalement en forme de tronc de cône.

9. Dispositif de combustion selon l'une des revendications 1 à 8, **caractérisé en ce que** le tronçon tourné vers la chambre de combustion du corps de déplacement (64) est de forme sphérique.

10. Dispositif de combustion selon l'une des revendications 1 à 9, **caractérisé en ce que** le au moins un composant comporte un élément de fermeture (43), qui obture la chambre de combustion à une extrémité du brûleur (41).
